# EUROPÄISCHE PATENTSCHRIFT

(11) **EP 2 135 053 B1**
(45) Veröffentlichungstag und Bekanntmachung des Hinweises auf die Patenterteilung: **16.06.2010**
(21) Anmeldenummer: 08734968.4
(22) Anmeldetag: 02.04.2008
(51) Int. Cl.: G01M 13/02

(54) **VERFAHREN ZUM OPTIMALEN BETREIBEN VON GETRIEBEN**
METHOD FOR OPTIMALLY OPERATING GEARBOXES
PROCÉDÉ POUR FAIRE FONCTIONNER DES ENGRENAGES DE MANIÈRE OPTIMALE

(30) Priorität: 12.04.2007 DE 102007017614
(43) Veröffentlichungstag der Anmeldung: 23.12.2009
(73) Patentinhaber: Wittenstein AG, 97999 Igersheim (DE)
(72) Erfinder: ENGELBREIT, Michael, 97283 Riedenheim (DE); BAYER, Thomas, 97999 Igersheim (DE)
(74) Vertreter: Weiss, Peter
(86) Internationale Anmeldenummer: PCT/EP2008/002625
(87) Internationale Veröffentlichungsnummer: WO 2008/125218

(56) Entgegenhaltungen:
- EP-A- 1 408 259
- DE-A1-102005 003 983
- DE-C1- 10 039 015
- US-A- 4 776 224
- US-A1- 2006 106 549
- US-B1- 6 225 892
- DUBBEL: "Taschenbuch für den Maschinenbau" 1997, SPRINGER , BERLIN, HEIDELBERG, 19. AUFLAGE , XP002490806 Seite E19, Absatz 1.6.3 - Seite E23

## Beschreibung

Die Erfindung betrifft ein Verfahren zum optimalen Betreiben von mechanisch beanspruchten, bewegten, insbesondere rotierenden Bauteilen, wie Getrieben, bei denen im Betriebszustand eine Schadensakkumulation zur Beurteilung des Einflusses eines Lastkollektivs auf die Lebensdauer der mechanisch beanspruchten Bauteile eingesetzt wird.

### STAND DER TECHNIK

Eine Schadensakkumulation dient bekanntlich zur Beurteilung des Einflusses eines Lastkollektivs auf die Lebensdauer eines Bauteils. Im Normalfall unterliegt ein rotierendes Bauteil nicht nur einer Schwingungsbelastung mit konstanten Amplituden, d. h. einem rechteckigen Belastungskollektiv wie es z. B. im sogenannten Wöhlerversuch verwendet wird, sondern die Belastung ist in ihrer Höhe veränderlich. Im Wesentlichen sind es dynamische Belastungen, die zu einer Materialermüdung führen können, d. h. das jeweilige Bauteil kann lokal geschädigt werden. Überschreitet diese Schädigung einen gewissen Grenzwert, kann es in der Folge z. B. zu einer Rissbildung und damit zu einem Bruch des Bauteils kommen. Die Anzahl der Lastzyklen wiederum, die ein Bauteil bis zum Versagen erträgt, wird sodann als Lebensdauer des Bauteils bezeichnet. Jeder Lastzyklus kann eine gewisse Teilschädigung erzeugen, die in der Summe eine Gesamtschädigung ergibt, welche die lineare Schadensakkumulation behandelt.

Die US2006/106549 A1 beschreibt ein Verfahren zum optimalen Betreiben von Getrieben, wobei infolge einer Schadensakkumulationsrechnung mit im Betrieb ermittelten Lastkollektiven gegebenenfalls eine Kühlung zugeschaltet wird.

Die EP-A-1408259 beschreibt die Abschätzung der Restlebensdauer eines KraftfahrzeugGetriebes mittels einer Schadensakkumulationsrechnung

Die US-A-4776224 beschreibt die optimale Verteilung von in einem Planetengetriebe eines Untersetzungsanlassers wirkenden Lasten durch die geometrische Dimensionierung des Getriebes. Dabei wird zu Messung der Lasten das Getriebe entlang seines Umfanges in Kreisabschnitte aufgeteilt und die Lasten in den Kreissegmenten gemessen.

### AUFGABE

Ausgehend hiervon liegt der Erfindung die Aufgabe zugrunde, ein Verfahren zum optimalen Betreiben von insbesondere hochbelasteten rotierenden Bauteilen bereitzustellen, bei welchen mit Hilfe einer gezielt eingesetzten Schadensakkumulation eine Erhöhung der Lebensdauer dieser Bauteile erreicht werden soll.

### LÖSUNG DER AUFGABE

Gelöst wird diese Aufgabe durch ein Verfahren gemäß Anspruch 1.

Zur Lösung dieser Aufgabe führt, dass zur Bestimmung individueller Lastkollektive die bewegten Bauteile in mehrere Abschnitte unterteilt werden.

Nach Massgabe der Erfindung sind die Abschnitte bevorzugt über den Umfang der rotierenden Bauteile als eine Art Kreisabschnitte verteilt vorgesehen, wobei das jeweilige Schadenspotential dieser Abschnitte auf der Basis der tatsächlichen Belastungen bestimmt wird. Die jeweilige geeignete Betriebskenngrösse für die tatsächliche Belastung wird zweckmässigerweise in ihrer maximalen Höhe und zusätzlich in ihrer auftretenden Häufigkeit (Lastzyklus) gemessen.

Die jeweiligen individuellen Lastkollektive werden vorteilhaft zu einem Beanspruchungskollektiv zusammengefasst, wobei der Begriff Lastkollektiv aus der Betriebsfestigkeit stammt und ganz allgemein die Gesamtheit aller auftretenden Schwingungsamplituden über einen bestimmten Zeitraum an einem Bauteil bezeichnet. Schwingende Belastungen treten nämlich in der Praxis selten einstufig also mit nur einer einzigen Amplitude auf. Im Regelfall sind es viele unterschiedliche Amplituden ohne eine feste Reihenfolge.

Als Parameter der individuellen Lastkollektive können vor allem Drehmomente, Drehzahlen, Beschleunigungen, Umdrehungsgeschwindigkeiten, Temperaturen und dgl. herangezogen werden.

Das erfindungsgemässe Verfahren zeichnet sich besonders auch dadurch vorteilhaft aus, dass derjenige Kreisabschnitt des rotierenden Bauteils, der das höchste gemessene Beanspruchungskollektiv aufweist, durch eine Modulierung der jeweiligen Betriebskenngrösse entlastet wird, was wiederum der Verbesserung der Lebensdauer des rotierenden Bauteils zugute kommt. Hierbei kann die Modulierung derart erfolgen, indem ein Teil der Beanspruchung des höchsten Beanspruchungskollektivs auf einen oder mehrere weniger belastete Abschnitte verteilt wird, wobei hierbei zweckmässigerweise die tatsächlichen Belastungsdaten drahtlos auf einen elektronischen Rechner zu deren Abgleichung übertragen werden können.

Das erfindungsgemässe Verfahren ist besonders geeignet für die Auslegung von Getrieben und hier als Ausführungsbeispiel für die Auslegung eines Planetengetriebes, bei dem die Lastenverteilung über die Verzahnung definiert werden kann, wobei auch z. B. Zahnstangenantriebe ebenfalls optimiert werden können.

### FIGURENBESCHREIBUNG

Weitere Merkmale und Vorteile der vorliegenden Erfindung ergeben sich aus der nachfolgenden Beschreibung eines bevorzugten Ausführungsbeispiels in Verbindung mit der Zeichnung; es zeigen
- Fig. 1: eine schematische Seitenansicht eines Planetengetriebes,
- Fig. 2: ein Schaubild über den Belastungsverlauf bei einer Schadensakkumulation Verzahnung;
- Fig. 3: ein Schaubild über ein Beanspruchungskollektiv gemäss Fig. 2;
- Fig. 4: ein Schaubild bezüglich einer üblichen Werkstoff-Wöhlerlinie z. B. für einen Werkstoff 17CrNiMo6;
- Fig. 5: ein Schaubild bezüglich einer Zahnrad-Wöhlerlinie am Beispiel eines Ritzels;
- Fig. 6: ein Schaubild bezüglich einer Wöhlerlinie bezogen auf einen Ritzelzahn;
- Fig. 7: ein Schaubild über eine Schadensakkumulation bezüglich einer Wöhlerlinie bezogen auf zwei Ritzelzähne;
- Fig. 8: ein Schaubild über eine finite Schadensakkumulation bezüglich eines individuellen Lastkollektivs;
- Fig. 9: ein Schaubild über Schadenssummen (nach Miner) und
- Fig.10: ein Schaubild eines individuell modulierten Lastkollektivs.

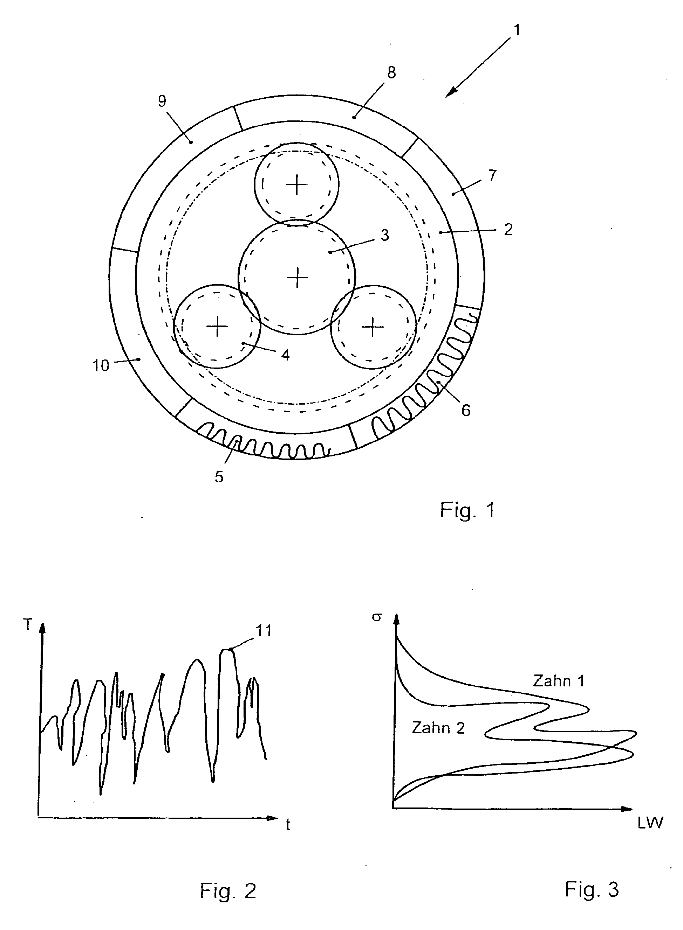

Das in Fig. 1 schematisch in Seitenansicht dargestellte, insgesamt mit 1 bezeichnete Planetengetriebe besitzt ein Hohlrad 2, ein Sonnenrad 3 und drei Ritzel 4. Das Hohlrad 2 ist in sechs messtechnische Abschnitte 5 bis 10 aufgeteilt, welche unterschiedlich durch die Ritzel 4 belastet werden, angedeutet bei den Abschnitten 5 und 6, d. h. der Abschnitt 6 wird gegenüber dem Abschnitt 5 in diesem Ausführungsbeispiel stärker belastet, sodass in diesem stärker belasteten Bereich des Planetengetriebes 1 am ehesten ein Versagen des Getriebes eintreten kann.

Ein typischer Belastungsverlauf 11, wie er in dem Abschnitt 6 des Planetengetriebes 1 gemäss Fig. 1 vorliegen kann, ist in Fig. 2 dargestellt, wobei hier eine Belastung in der Form der Drehmomente (Torsion T) über die Zeit (t) aufgetragen ist. In Fig. 3 ist dagegen ein Beanspruchungskollektiv bezüglich der Verzahnung am Beispiel zweier Zähne gezeigt, wobei bei diesem Schaubild die Wechselspannungen (σ) über die Lastwechsel (LW) aufgetragen sind.

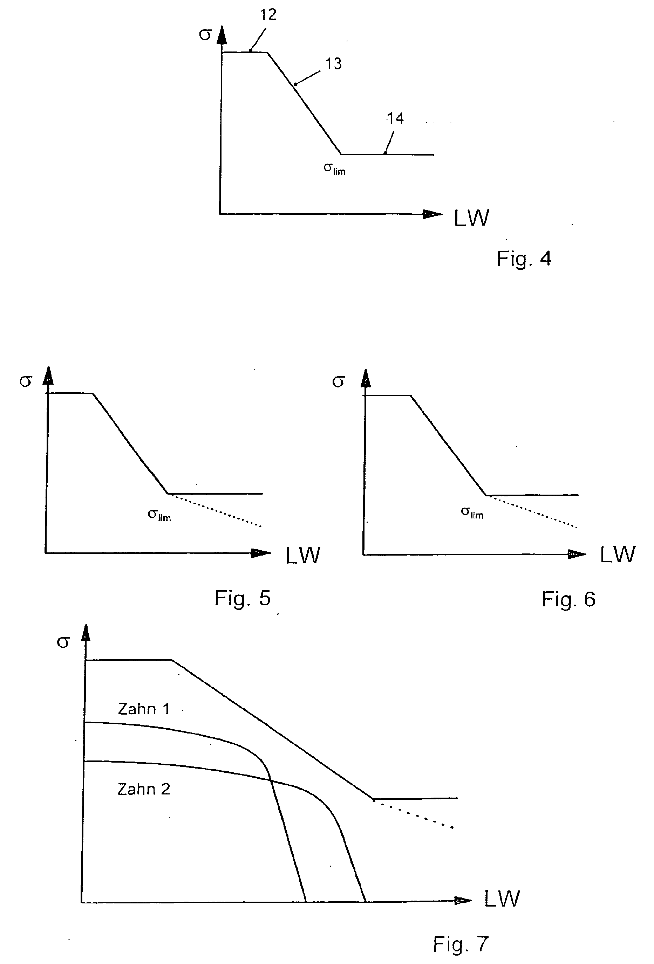

Grundlage fast jeder Getriebefestigkeitsberechnung sind die sogenannten Wöhler-Kurven, welche an einfachen, meist zylindrischen Proben abgenommen werden. Die jeweilige Probe wird dabei einer dynamischen Belastung mit konstanter Amplitude ausgesetzt, und die zugehörige ertragbare Lastwechselzahl für verschiedene Lastsituationen wird in ein Diagramm eingetragen, welches am Beispiel des Werkstoffes 17CrNiMo6 in Fig. 4 dargestellt ist. Hierbei gibt die mit 12 bezeichnete waagrechte Gerade den Bereich der Kurzfestigkeit bzw. Kurzzeitschwingfestigkeit (K) an; sodann folgt eine abfallende Gerade 13, die den Bereich der Zeitfestigkeit bzw. Zeitschwingfestigkeit (Z) angibt und schliesslich folgt eine auslaufende Gerade 14, die den Bereich der sogenannten Dauerfestigkeit (D) verkörpert.

Entsprechend dazu sind in den Schaubildern der Fig. 5 bis 7 Wöhlerlinien dargestellt, von denen die in Fig. 5 ein Ritzel 4 und die in Fig. 6 einen Zahn dieses Ritzels 4 verkörpert. In Fig. 7 ist dagegen eine Schadensakkumulation zweier Zähne dargestellt.

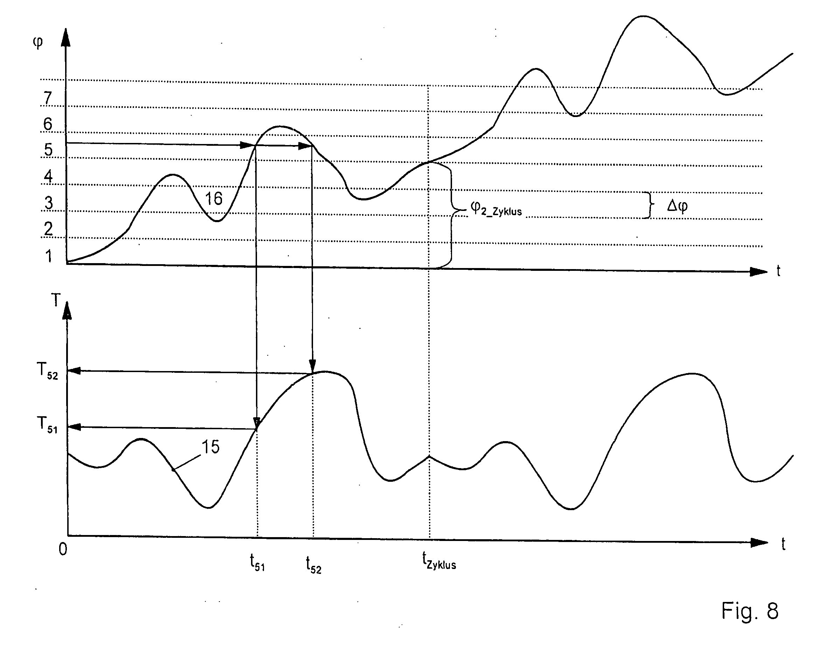

In Fig. 8 sind zwei übereinander angeordnete Schaubilder gezeigt, welche individuelle Lastkollektive 15 und 16 darstellen. Bei dem unteren Schaubild sind dabei über die Zeit (t) die Drehmomente (T) aufgetragen und in dem oberen Schaubild über die Zeit (t) die jeweiligen Drehwinkel (ϕ) bezogen auf einzelne Zähne 1 bis 7.

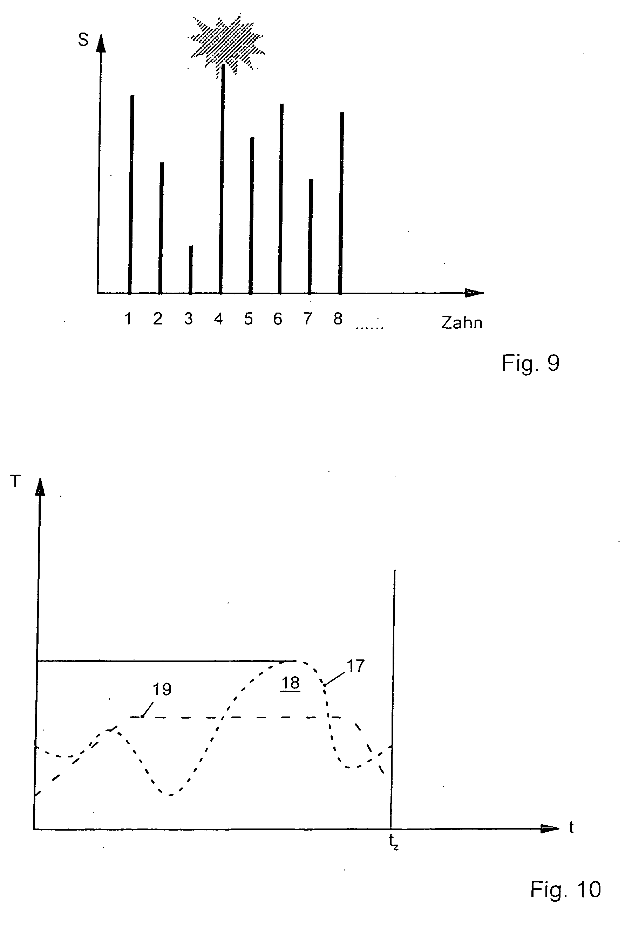

Werden nun die individuellen Lastkollektive aufaddiert, so kommt man zu dem Schaubild gemäss Fig. 9, wo die Schadenssummen (S) über die einzelnen Zähne 1 bis 8 aufgetragen sind, wobei bei dem Zahn mit der Nummer 4 ein Fall angedeutet ist (Explosionsstern), bei dem aufgrund der Höhe der Schadenssumme (S) ein Zahnbruch stattgefunden hat, was auch in Fig. 5 bis 7 durch die dort jeweils gestrichelt gezeichneten Linien wiedergegebenen ist, d. h. die jeweilige Zeitschwingfestigkeit (Z) erreichte nicht die Dauerfestigkeit (D).

Das Schaubild gemäss Fig. 10 zeigt schliesslich einen Belastungszyklus (tz) mit einem individuellen Lastkollektiv 17, am Beispiel von Drehmomenten (T) über die Zeit (t) aufgetragen, dessen Maximum 18 derart moduliert worden ist, wie es der mit 19 bezeichnete Kurvenverlauf wiedergibt, d. h. dass z. B. der Kreisabschnitt 6 in Fig. 1 mit dem höchsten gemessenen Beanspruchungskollektiv durch die Modellierung über einen nicht näher dargestellten elektronischen Rechner derart moduliert worden ist, dass dieser Abschnitt 6 durch diese Betriebskenngrösse (Drehmoment) entlastet wird, und zwar indem ein Teil (Spitzenlast) der Beanspruchung des höchsten Beanspruchungskollektivs auf einen oder mehrere weniger belastete Abschnitte 6 bis 10 verteilt wird.

Dadurch wird das rotierende Bauteil in der Form z. B. des Planetengetriebes 1 im Betriebszustand gleichmässiger belastet, wodurch sich die Lebensdauer der Bauteile vorausbestimmbar wesentlich verlängert, und zwar um das 2- bis 10-fache, wodurch derartige Bauteile auch an Wert gewinnen.

Insgesamt ist somit durch das erfindungsgemässen Verfahren eine wirtschaftliche Lösung zum optimalen Betreiben mechanisch beanspruchter, insbesondere rotierender Bauteile aufgezeigt, bei dem die tatsächlichen Belastungen der Bauteile in ihrer Wirkung als mechanische Beanspruchung für die einzelnen messtechnisch unterteilten Abschnitte der Bauteile etwa gleichmässig auf diese verteilt werden, und zwar indem nach einer Art eines Auswuchtvorgangs die unterschiedlichen Belastungen durch deren Abgleichung mittels eines elektronischen Rechners eine Vergleichmässigung der einzelnen Belastungen und somit eine nicht unwesentliche Erhöhung der Lebensdauer erfahren.

### Bezugszeichenliste

| | | | | | |
|---|---|---|---|---|---|
| 1 | Planetengetriebe | 34 | | 67 | |
| 2 | Hohlrad | 35 | | 68 | |
| 3 | Sonnenrad | 36 | | 69 | |
| 4 | Ritzel | 37 | | 70 | |
| 5 | Abschnitt | 38 | | 71 | |
| 6 | Abschnitt | 39 | | 72 | |
| 7 | Abschnitt | 40 | | 73 | |
| 8 | Abschnitt | 41 | | 74 | |
| 9 | Abschnitt | 42 | | 75 | |
| 10 | Abschnitt | 43 | | 76 | |
| 11 | Belastungsverlauf | 44 | | 77 | |
| 12 | waagrechte Gerade | 45 | | 78 | |
| 13 | abfallende Gerade | 46 | | 79 | |
| 14 | auslaufende Gerade | 47 | | | |
| 15 | Lastkollektiv | 48 | | | |
| 16 | Lastkollektiv | 49 | | | |
| 17 | Lastkollektiv | 50 | | | |
| 18 | Maximum | 51 | | | |
| 19 | Kurvenverlauf | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Betreiben von mechanisch beanspruchten, bewegten, rotierenden Bauteilen, bei denen im Betriebszustand eine Schadensakkumulation zur Beurteilung des Einflusses eines Lastkollektivs auf die Lebensdauer der belasteten rotierenden Bauteile eingesetzt wird,
**dadurch gekennzeichnet, dass**
zur Bestimmung individueller Lastkollektive (6; 18) die bewegten Bauteile (1) in mehrere Kreisabschnitte (5 bis 10) unterteilt werden und die jeweiligen individuellen Lastkollektive zu einem individuellen Beanspruchungskollektiv zusammengefasst werden, und dass mindestens ein Kreisabschnitt (6) des Bauteils (1) mit dem höchsten gemessenen Beanspruchungskollektiv durch eine Modulierung eines Drehmomentes oder einer Drehzahl als Betriebskenngröße entlastet wird.

2. Verfahren nach Anspruch 1, **dadurch gekennzeichnet, dass** das jeweilige Schadenspotential dieser Kreisabschnitte (5 bis 10) auf der Basis von den tatsächlichen Belastungen bestimmt wird.

3. Verfahren nach Anspruch 2, **dadurch gekennzeichnet, dass** als Betriebskenngröße für die jeweilige tatsächliche Belastung, deren maximale Höhe (18) gemessen wird.

4. Verfahren nach einem der vorhergehenden Ansprüche, **dadurch gekennzeichnet, dass** als Betriebskenngröße für die jeweilige tatsächliche Belastung, zusätzlich der Lastzyklus der auftretenden maximalen Belastung gemessen wird.

5. Verfahren nach einem der vorhergehenden Ansprüche, **dadurch gekennzeichnet, dass** die Modulierung derart erfolgt, indem ein Teil der Belastungen des höchsten Beanspruchungskollektivs auf einen oder mehrere weniger belastete Abschnitte (5) verteilt wird.

6. Verfahren nach einem der vorhergehenden Ansprüche, **dadurch gekennzeichnet, dass** die Lastenverteilung an wählbaren Bereichen von Verzahnungsteilen erfolgt.

## Claims

1. A method for operating mechanically stressed, moving, rotating components, in which in the operating state a damage accumulation is used for assessing the influence of a load spectrum on the life of the loaded rotating components,
**characterised in that**
for determining individual load spectra (6; 18) the moving components (1) are subdivided into a plurality of circle sections (5 to 10) and the respective individual load spectra are combined to form an individual stress spectrum, and **in that** at least one circle section (16) of the component (1) with the highest measured stress spectrum is relieved of stress by modulating a torque or a speed of rotation as operating characteristic.

2. A method according to Claim 1, **characterised in that** the respective damage potential of these circle sections (5 to 10) is determined on the basis of the actual loads.

3. A method according to Claim 2, **characterised in that** the maximum height (18) of the respective actual load is measured as operating characteristic therefor.

4. A method according to one of the preceding claims, **characterised in that** additionally the load cycle of the maximum load which occurs is measured as operating characteristic for the respective actual load.

5. A method according to one of the preceding claims, **characterised in that** the modulation takes place such **in that** part of the loads of the highest stress spectrum is distributed to one or more less loaded sections (5).

6. A method according to one of the preceding claims, **characterised in that** the load distribution takes place at selectable regions of toothed parts.

## Revendications

1. Procédé pour faire fonctionner des composants rotatifs en mouvement sollicités mécaniquement, dans lequel est utilisée, à l'état de fonctionnement, une accumulation de dégâts pour évaluer l'influence d'un collectif de charge sur la durée de vie des composants rotatifs sollicités,
**caractérisé par le fait que**
pour déterminer des collectifs de charge individuels (6; 18), les composants en mouvement (1) sont subdivisés en plusieurs segments de cercle (5 à 10) et les collectifs de charge individuels respectifs sont regroupés pour former un collectif de sollicitation individuel, et au moins un segment de cercle (6) du composant (1) au collectif de sollicitation mesuré le plus élevé est détendu par une modulation d'un couple de rotation ou d'un nombre de tours comme grandeur de fonctionnement caractéristique.

2. Procédé selon la revendication 1, **caractérisé par le fait que** le potentiel de dégât respectif de ces segments de cercle (5 à 10) est déterminé sur base des sollicitations réelles.

3. Procédé selon la revendication 2, **caractérisé par le fait qu'**il est mesuré, comme grandeur de fonctionnement caractéristique pour la sollicitation réelle respective, son hauteur (18).

4. Procédé selon l'une des revendications précédentes, **caractérisé par le fait qu'**il est mesuré, comme grandeur de fonctionnement caractéristique pour la sollicitation réelle respective, en outre le cycle de charge de la sollicitation maximale qui se produit.

5. Procédé selon l'une des revendications précédentes, **caractérisé par le fait que** la modulation a lieu de sorte qu'une partie des sollicitations du collectif de sollicitation le plus élevé soit répartie sur un ou plusieurs segments moins sollicités (5).

6. Procédé selon l'une des revendications précédentes, **caractérisé par le fait que** la répartition de charge a lieu à des endroits sélectionnables de parties de denture.
